Europäisches Patentamt

European Patent Office

Office européen des brevets

(19)

(11) Veröffentlichungsnummer: **0 496 856 B1**

(12) **EUROPÄISCHE PATENTSCHRIFT**

(45) Veröffentlichungstag der Patentschrift: **10.05.95**

(51) Int. Cl.6: **B01D 53/34**

(21) Anmeldenummer: **91914390.9**

(22) Anmeldetag: **14.08.91**

(86) Internationale Anmeldenummer:
**PCT/EP91/01548**

(87) Internationale Veröffentlichungsnummer:
**WO 92/03211 (05.03.92 92/06)**

(54) **Verfahren und Vorrichtung zur vollständigen, trocknen Entschwefelung von SO2- und staubhaltigen Verbrennungsabgasen.**

(30) Priorität: **17.08.90 EP 90115773**

(43) Veröffentlichungstag der Anmeldung:
**05.08.92 Patentblatt 92/32**

(45) Bekanntmachung des Hinweises auf die Patenterteilung:
**10.05.95 Patentblatt 95/19**

(84) Benannte Vertragsstaaten:
**BE DE FR**

(56) Entgegenhaltungen:
**EP-A- 0 253 324**
**WO-A-86/03425**
**DE-A- 3 332 928**
**DE-B- 2 729 476**
**US-A- 4 598 652**

**Patent Abstracts of Japan, Band 9, Nr. 73 (M-368)[1796], 3. April 1985, & JP,A, 59205509 (NIPPON FURNACE KOGYO K.K.) 21. November 1984**

(73) Patentinhaber: **Schoppe, Fritz, Dr.-Ing.**
**Gustav-Adolf-Strasse 5**
**D-82538 Geretsried (DE)**

(72) Erfinder: **SCHOPPE, Fritz, Dr.-Ing.**
**Gustav-Adolf-Strasse 5**
**D-8192 Geretsried 2 (DE)**
Erfinder: **PRÖSTLER, Josef, Dipl.-Ing.**
**Schlesische Strasse 18a**
**D-8192 Geretsried 1 (DE)**

(74) Vertreter: **Körner, Ekkehard, Dipl.-Ing.**
**Patentanwalt**
**Maximilianstrasse 58**
**D-80538 München (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 496 856 B1

**Beschreibung**

Die vorliegende Erfindung bezieht sich auf ein Verfahren zur vollständigen trockenen Entschwefelung von $SO_2$ und Flugasche enthaltenden Abgasen der Verbrennung von aschehaltigen Brennstoffen, insbesondere Kohlenstaub, sowie eine Vorrichtung zur Ausführung des Verfahrens.

Mit trockener Entschwefelung ist gemeint, daß sich der Entschwefelungsvorgang in einem solchen Temperaturabstand vom Taupunkt der Verbrennungsabgase abspielt, daß eine Kondensation der Abgase an nachgeschalteten Anlagenteilen, wie beispielsweise eine Entstaubungsanlage und der Kamin, ausgeschlossen ist.

Für die Entschwefelung sind bisher nur Naßverfahren bekannt geworden, bei denen die Verbrennungsabgase mit absorbierenden Flüssigkeiten, wie beispielsweise Kalilauge, in Kontakt gebracht werden. Nachteilig ist dabei, daß die Verbrennungsabgase diese Verfahrensstufe vollständig oder näherungsweise feucht gesättigt verlassen, woraus in den nachfolgenden Anlageteilen Verkrustungs- und Korrosionserscheinungen resultieren, denen man durch Wiederaufheizung der Abgase zu begegnen versucht. Ebenso sind trockene Entschwefelungsverfahren bekannt geworden, bei denen beispielsweise $CaCO_3$ in den Feuerraum eingeblasen wird. Dieses zersetzt sich bei ca. 900°C zu CaO, das dann teilweise mit $SO_2$ und $SO_3$ reagiert. Auf diese Weise konnten Entschwefelungsgrade von etwas über 80% erreicht werden, jedoch keine vollständige Entschwefelung.

Aus der EP-A-0 253 324 ist ein Verfahren zum Vermindern des $SO_2$-Anteils in Verbrennungsabgasen bekannt, bei dem Kalkpartikel als trockenes Absorbens in einen kohlegefeuerten Kessel eingeblasen werden. Durch die Verbrennung wird der Kalk zu CaO kalziniert, das mit $SO_2$ aus dem Abgas und Sauerstoff $CaSO_4$ bildet. Grundlage dieses Verfahrens ist, daß sich $CaCO_3$ bei ca. 900°C zu CaO zersetzt, das daraus in der vorerwähnten Weise gebildete $CaSO_4$ bis ca. 1350°C stabil ist und bei Abkühlung auch stabil bleibt. Dabei findet eine teilweise Einbindung des $SO_2$ zu $CaSO_4$ statt. Im Abgas sind dann noch 1140 bis 1425 mg/m$^3$ $SO_2$ enthalten. Je nach anfänglichem Schwefelgehalt des Brennstoffs bedeutet dies eine Schwefeleinbindung von 20% bis 40%. Eine höhere $SO_2$-Einbindung ist nicht erreichbar, weil die Oberfläche der CaO-Teilchen zu $CaSO_4$ reagiert und diese neue Oberflächenschicht dann den Kern des CaO vom $SO_2$ abschirmt.

Aus der DE-A-32 40 373 und DE-A-33 32 928 sind Entschwefelungsverfahren bekannt, bei denen die Abgase gemeinsam mit Flugasche und/oder zugesetzten Absorbentien bis dicht an den Taupunkt der Verbrennungsabgase abkühlt werden bzw. der Taupunkt durch Zusatz von Wasser oder Wasserdampf entsprechend angehoben wird. Dabei wird der letzte Teil der Abkühlung der Rauchgase dadurch bewirkt, daß man vorher anderweitig abgekühlte Flugasche und/oder Absorbentien dem Abgas zusetzt und dieses dadurch weiter abkühlt. Dabei wird angestrebt, die Abkühlung auf weniger als 5°C oberhalb des Taupunktes zu bewirken, weil nur auf diese Weise Entschwefelungsgrade von 90% und mehr erreicht werden können. Eine vollständige Entschwefelung ist aber auch in diesem Verfahren nicht bekanntgeworden.

Ein weiteres, trocken arbeitendes Entschwefelungsverfahren ist in der Zeitschrift ZKG3/1990, S. 139 - 143 beschrieben. Bei diesem Verfahren werden die $SO_2$-haltigen Abgase durch eine Wirbelschicht geleitet, die aus $Ca(OH)_2$ und Zementrohmehl besteht. Die Wirbelschicht wird in unmittelbarer Nähe des Wassertaupunktes betrieben, insbesondere bei einer Betriebstemperatur um 65°C bei einem Taupunkt zwischen 58°C und 51°C. Trotz des apparativen Aufwandes, des Energieverbrauchs und des Einsatzes an Absorbentien gelingt die Entschwefelung nur herab bis zu einem mittleren $SO_2$-Gehalt von 423 mg/m$^3$. Nachteilig ist an diesem Verfahren weiter, daß die Nähe zum Taupunkt Anbackungen verursacht und der verbleibende $SO_2$-Gehalt zu Korrosionen der nachgeschalteten Anlagenteile führt. Durch weitere Verringerung des Temperaturabstandes zum Taupunkt, der hier im Grenzfall nur noch 4°C beträgt, kann die Entschwefelung zwar noch etwas verbessert werden, jedoch mit stark zunehmenden Problem hinsichtlich Anbackungen und Korrosion. Eine vollständige und trockene Entschwefelung ist auch mit diesem Verfahren nicht möglich.

Der Erfindung liegt die Aufgabe zugrunde, ein Verfahren anzugeben, mit dem eine vollständige trockene Entschwefelung von $SO_2$ und Flugasche enthaltenden Abgasen der Verbrennung von aschehaltigen Brennstoffen, insbesondere von Kohlenstaub, möglich ist.

Diese Aufgabe wird durch die im Anspruch 1 angegebene Erfindung gelöst.

Mit Hilfe der Erfindung ist es darüberhinaus auch möglich, $SO_2$-haltige Verbrennungsabgase solcher Brennstoffe vollständig zu entschwefeln, die überhaupt keinen oder keinen ausreichenden Anteil an Flugasche enthalten. Eine hierauf gerichtete Abwandlung des erfindungsgemäßen Verfahrens ist Gegenstand des Anspruchs 2.

Weiterbildungen der Erfindung und Vorrichtungen zur Ausführung des Verfahrens sind Gegenstand weiterer Ansprüche.

2

Die Erfindung soll nachfolgend am Beispiel der Entschwefelung der Abgase aus der Verbrennung von rheinischem Braunkohlenstaub beschrieben werden.

Dieser Brennstoff ist aus der Literatur bekannt. Seine Asche enthält meist 30-50 % Ca- und Mg-Verbindungen, die in der Verbrennung weitgehend zu CaO und MgO kalzinieren und in der vorstehend beschriebenen Weise $SO_2$ und $SO_3$ einbinden. Es ist bekannt, daß dadurch bereits Entschwefelungsgrade von 20-50 % erzielt werden. Vergleichbare Braunkohlesorten sind beispielsweise aus Sachsen, Ungarn sowie einigen außereuropäischen Ländern bekannt. Mit diesen läßt sich das erfindungsgemäße Verfahren besonders leicht ausführen. Dieses soll an dem obigen Bespiel der Verbrennung von rheinischem Braunkohlenstaub beschrieben werden.

Der Braunkohlenstaub wird so verbrannt, daß seine Aufheizgeschwindigkeit den kritischen Wert von 3000°C/sec überschreitet und er eine Temperatur von wenigstens 900°C, bevorzugt 1200°C erreicht. Hierdurch erfahren alle Komponenten der bei der Verbrennung entstehenden Ascheteilchen eine starke Oberflächenaktivierung, die je nach Aufheizgeschwindigkeit bis zu 10 sec lang anhält und dann langsam abklingt. Die Oberflächenaktivität ist dabei um so größer, je größer die Aufheizgeschwindigkeit ist. Die günstigsten Werte erzielt man bei Aufheizgeschwindigkeiten oberhalb 5000°C/sec. Die größte Aufnahmefähigkeit für $SO_2$ haben die Ascheteilchen dann, wenn ihre Temperatur 1200°C überschritten hat, sie jedoch noch nicht so heiß geworden sind, daß $Fe_2O_3$ oder Verunreinigungen der Asche schmelzen, was sich bei Betrachten der Ascheteile unter dem Mikroskop leicht erkennen läßt.

Die Abgase der Verbrennung werden dann beispielsweise in einen Kessel in bekannter Weise abgekühlt. Normalweise geht man dabei mit Rücksicht auf Entstaubungsanlagen, Speisewassertemperaturen und Kamin herunter bis auf Temperaturen von 130 bis 150°C.

Erfindungsgemäß werden die Rauchgase jedoch weiter abgekühlt bis auf eine nachfolgend definierte Temperaturdistanz über dem Wassertaupunkt der Verbrennungsabgase, wobei die Temperaturdistanz davon abhängt, wie lange die Abgase und der darin enthaltene Flugaschestaub auf einer Temperatur von weniger als 25°C oberhalb des Wassertaupunktes gehalten werden. Bei einer Verweilzeit in diesem Temperaturbereich von 0,8 - 1,0 sec müssen die Abgase auf weniger als 25°C über den Taupunkt abgekühlt werden. Mit kürzerer Verweilweilzeit in dem genannten Temperaturbereich sinkt der erforderliche Taupunktabstand, auf den die Rauchgase abgekühlt werden müssen. Bei einer Verweilzeit von 0,05 - 0,1 sec in dem genannten Temperaturbereich müssen die Abgase auf eine Temperatur auf 11°C über den Taupunkt abgekühlt werden, wobei Zwischenwerte linear interpoliert werden können.

Wird ein Temperaturabstand von 35-40°C zum Taupunkt unterschritten, setzt eine schnelle Einbindung des $SO_2$ ein; eventuell vorhandenes $SO_3$ ist bereits absorbiert und spielt keine Rolle mehr. Bei Unterschreiten eines Temperaturabstandes zum Taupunkt von 10-25°C - je nach Verweilzeit im vorgenannten Temperaturbereich - ist das $SO_2$ quantitativ eingebunden. Damit ist eine vollständige Entschwefelung erreicht.

Der Beginn der Schwefeleinbindung ist bereits äußerlich an der Farbe der Verbrennungsasche zu erkennen. Diese ist rheinischem Braunkohlenstaub üblicherweise gelblich bis ockerfarben, mit Variationen bis in braune Farbtöne hinein. Mit Beginn der Schwefeleinbindung wird die Asche grün. Wenn man einen solchermaßen betriebenen Kessel oder einem den Kessel nachgeschalteten Abgaskühler inspiziert, findet man meistens einen leichten Staubbelag auf allen Oberflächen. Solange dieser noch gelblich, ockerfarben oder bräunlich ist, hat noch keine nennenswerte über die vorgenannte Primäreinbindung hinausgehende Einbindung des $SO_2$ stattgefunden. Den Beginn der $SO_2$-Einbindung erkennt man am ersten Auftreten von grüner Asche.

Dabei wird ein Teil des $SO_2$ chemisch eingebunden; die Grünfärbung der Asche deutet auf Eisenverbindungen hin. Wenn man solche Asche jedoch einige Stunden in einem geschlossenen Behälter lagert und denselben dann öffnet, ist ein leichter, typisch stechender Geruch nach $SO_2$ bemerkbar. Offensichtlich hat hier zusätzlich eine rein physikalische Oberflächenabsorbtion stattgefunden, die möglicherweise im Laufe der Zeit etwas abklingt. Bei Erwärmung der Asche auf 250-300°C setzt eine exotherme Reaktion der Asche mit der Umgebungsluft unter $O_2$-Verzehr ein, und die Asche nimmt dann wieder ihre bekannte gelblich-ockerfarbene-bräunliche Farbe an. Auch hierbei ist ein leichter Geruch nach $SO_2$ feststellbar.

Der Einfluß der Verweilzeit deutet darauf hin, daß bei der Einbindung des $SO_2$ die feinen Ascheanteile besonders wirksam sind. Je länger die Verweilzeit ist, in desto höherem Maße können auch die größeren Ascheanteile reagieren.

Das erfindungsgemäße Verfahren ist ebenfalls anwendbar für andere $SO_2$-haltige Verbrennungsabgase, die keine den Komponenten des Rheinbraunstaubes vergleichbare Feststoffanteile enthalten. Diesen können solche feinkörnigen Feststoffe in der Verbrennung zugesetzt werden, wobei die erfindungsgemäße Bedingung der Oberflächenaktivierung erfüllt sein muß.

Grundsätzlich kann das Verfahren mit allen Apparaten nach dem Stand der Technik ausgeführt werden, die die Verfahrensbedingungen erfüllen. Als Beispiel hierfür wird nachstehend eine Vorrichung beschrieben, mit der sich die Verfahrensbedingungen besonders vorteilhaft erfüllen lassen.

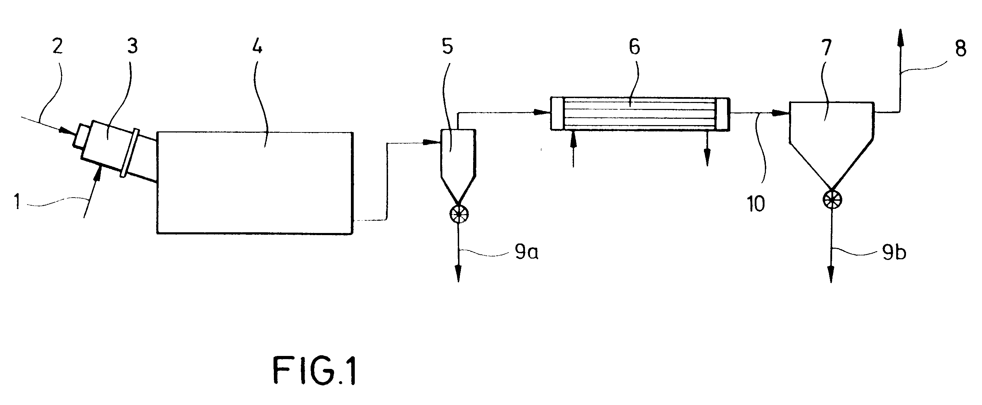

Fig. 1 zeigt das Verfahrensschema. Brennluft 1 sowie der von Trägerluft transportierte Kohlenstaub 2 werden in bekannter Weise einem Brenner 3 zugeführt. Dieser befeuert einen Kessel 4. Es kann zweckmäßig sein, dem Kessel 4 einen Zyklonabscheider 5 für Überkorn nachzuschalten. Diesem folgt ein Kühler 6, der mit Ein- und Austritten für ein Kühlmedium versehen ist. Erfindungsgemäß wird das Kühlmedium in bekannter Weise so eingestellt, daß die abgasseitigen Oberflächen der Wärmeübertragungsfläche eine Temperatur zwischen dem Taupunkt und derjenigen Temperatur aufweisen, unterhalb der das $SO_2$ absorbiert ist. Insbesondere kann der Kühler 6 als Röhrenkühler ausgebildet sein, bei dem die Abgase durch die Röhren strömen, die von außen mit Wasser auf der gewünschten Temperatur gehalten werden. Dem Kühler 6 ist über eine Leitung 10 in bekannter Weise eine Feinentstaubungsanlage 7 nachgeschaltet, beispielsweise ein Gewebefilter. Die entstaubten Abgase verlassen die Feinentstaubungsanlage 7 über eine Abgasleitung 8.

Die jeweils abgeschiedenen Aschemengen verlassen über Austragevorrichtungen 9a und 9b die Anlage.

Das abgasseitige Röhrenvolumen des Kühlers 6, die Verbindungsleitung 10 zwischen Kühler 6 und Feinentstaubungsanlage 7 sowie das staubgasseitige Volumen der letzteren bestimmen die Verweilzeit der Abgase gemeinsam mit wenigstens dem Feinstanteil der Asche in demjenigen Temperaturbereich, in dem die Absorption des $SO_2$ stattfindet. Die Verweilzeit bestimmt sich in bekannter Weise aus dem Volumenstrom des Abgases und dem vorgenannten Volumen.

Es entspricht dem Stand der Technik, alle von abgas- und ascheberührten Oberflächen auf einer Temperatur oberhalb des Taupunktes des Abgases zu halten.

Das Vorhandensein des Zyklonentstaubers 5 ist nicht unmittelbar verfahrenswesentlich. Er kann zweckmäßig sein, um eventuell noch brennendes Überkorn aus dem Abgasstrom abzuscheiden. Seine Abscheideleistung ist jedoch nach den bekannten Auslegungsregeln für Zyklonentstauber so zu begrenzen, daß in seinem Austritt noch eine hinreichende Feinstaschemenge vorhanden ist. Die hinreichende Feinstaschemenge ist dadurch definiert, daß bei Unterschreitung dieser Menge, bei ansonsten gegebener Einhaltung aller Verfahrensbedingungen, die Absorption des $SO_2$ nicht mehr vollständig ist.

Verfahrenswesentlich ist die Erzielung einer hinreichenden Aufheizgeschwindigkeit der Kohlenstaubteilchen vor und während der Verbrennung. Die einschlägigen Lehrbücher der Feuerungstechnik geben Regeln zum Erzielen der gewünschten Aufheizgeschwindigkeiten, bzw. Verweilzeiten. Meist ist den Lehrbüchern jedoch nicht von Verweilzeit, sondern von Feuerraumbelastungen die Rede. Diese sind den Verweilzeiten in bekannter Weise umgekehrt proportional. Besonders geeignet sind Kombinationen von Hochleistungsbrennern und zugehörigem Brennraum, häufig als Combustoren bezeichnet, sofern diese Geräte den praktischen Anforderungen der Kohlenstaubverbrennung gerecht werden.

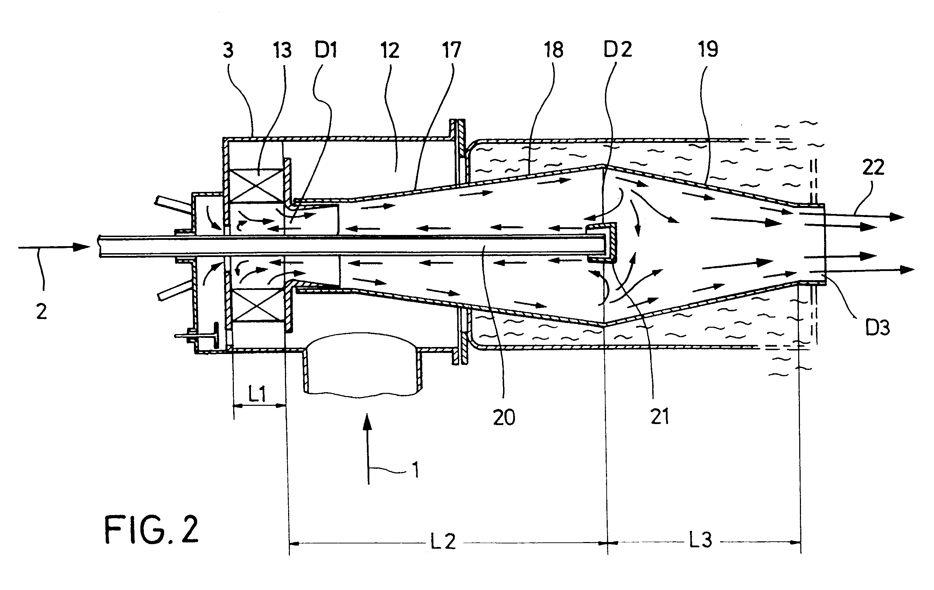

Vorzugsweise ist dies der Fall bei dem in Fig. 2 dargestellten Brenner 3. Diesem wird Brennluft 1 sowie der von Trägerluft beförderte Kohlenstaub 2 in bekannter Weise zugeführt. Die Strömung der Brennluft 1 wird in einem Sammelraum 12 vergleichmäßig und wird dann in einem radialen Schaufelgitter 13 in Drall versetzt. Mit diesem tritt die Brennluft 1 in die divergente Brennermuffel 17 ein, die anschließend in einen wassergekühlten Teil 18 übergeht. An diesem schließt sich eine Flammbeschleunigungsdüse 19 an.

In die Brennermuffel 17 ist eine Kohlenstaublanze 20 eingeführt, die an ihrem Ende eine Umlenkhaube 21 trägt. Ein Brenner ähnlicher Art ohne Umlenkhaube am freien Lanzenende ist aus DE-B-27 29 476 bekannt, doch sind dort keine Abmessungen in Bezug auf eine Betriebsleistung offenbart.

Für eine Feuerungsleistung von 3,9 MW werden erfindungsgegemäß die in Fig. 2 dargestellten Abmessungen wie folgt verwendet:

| | |
|---|---|
| Eintrittsdurchmesser der Muffel: | D1 = 338 mm |
| Austrittsdurchmesser der Muffel: | D2 = 700 mm |
| Austrittsdurchmesser der Düse: | D3 = 350 mm |
| Länge des Schaufelgitters: | L1 = 197 mm |
| Länge der Muffel: | L2 = 1470 mm |
| Länge der Düse: | L3 = 850 mm |

Die Leitschaufeln 13 sind vorteilhaft nach einer logarithmischen Spirale geformt, mit einem Spiralwinkel gegen die Umfangsrichtung zwischen 6 und 12°, bevorzugt 8-10°.

Bei der Wahl dieser Abmessungen stellt sich in der Brennermuffel die in Fig. 2 gezielte Strömung ein, wobei nur die Durchsatzkomponenten gezeichnet sind. Diese sind von einer Umfangskomponente derart überlagert, daß sich am Außenumfang ein Strömungswinkel von ca. 45° gegen die Mantellinie ergibt.

Bei Wahl der genannten Abmessungen werden zwei Gruppen vor Ergebnissen erreicht:

a) Flammstabilität:

Es bildet sich eine wandnahe Durchsatzströmung vorn Durchmesser D1 zum Durchmesser D2 aus. Hier kehrt etwa die Hälfte der Strömungsmenge radial nach innen um und läuft entlang der Kohlenstaublanze 20 durch den Querschnitt des Durchmessers D1 bis zum Bereich der Leitschaufeln 13 zurück. Hier kehrt sich diese Strömung wieder radial nach außen und strebt zusammen mit dem Frischluftdurchsatz dem Durchmesser D2 zu. Zwischen Durchsatz- und Rückströmung bildet sich eine Zone sehr intensiver Turblenz aus, in der sich die Flamme stabilisiert.

Der Kohlenstaub 2 wird zusammen mit einer vorzugsweise konstanten Trägerluftmenge eingeführt und mit Hilfe der Umlenkhaube 21 in die Rückströmung eingeblasen.

Unter der Einstrahlung der umgebenen Flamme verdampfen die flüchtigen Komponenten des Kohlenstaubes und bilden mit der Brennluft 1 eine gasartige Flamme, die zusammen mit dem restlichen Kohlenstaub im Flammstrahl 22 ausbrennt. Dieser erreicht unter den angegebenen Bedingungen eine Geschwindigkeit von ca. 100 m/sec, welche wesentlich ist, für das Sauberhalten des nachgeschalteten Feuerraumes.

b) Emissionen:

Die angegebenen Abmessungen und Betriebsdaten ergeben Abgasemissionen deutlich unterhalb der Grenzwerte der TA-Luft.

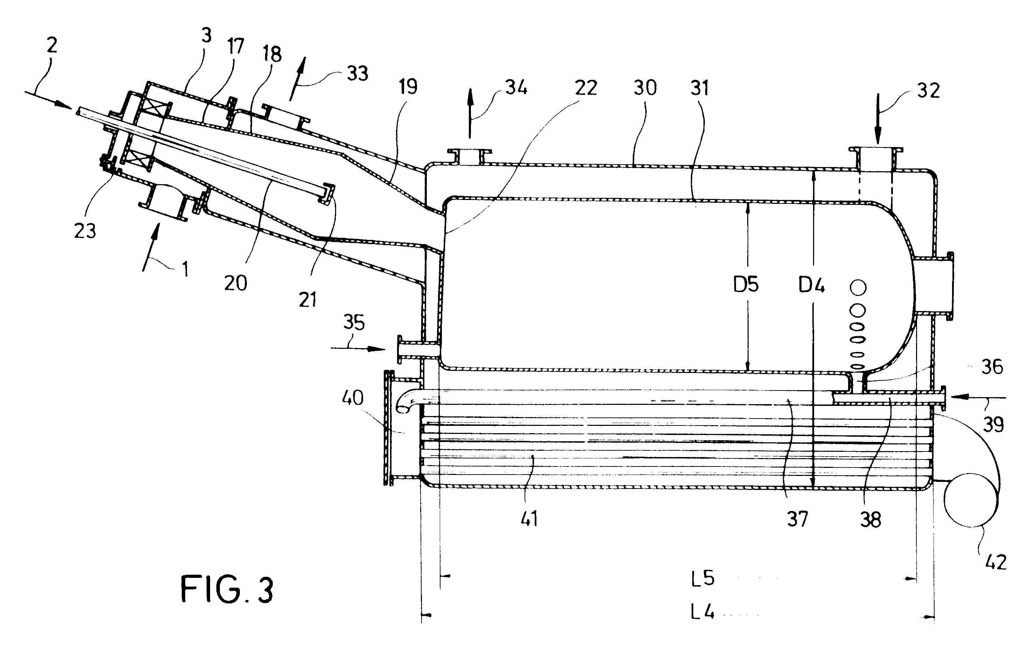

Fig. 3 zeigt einen für das erfindungsgemäße Verfahren besonders geeigneten Kessel, der im vorliegenden Fall als Warmwasserkessel dargestellt ist.

Der Kesselkörper 30 vom Durchmesser D4 und der Länge L4 enthält ein Flammrohr 31 vom Durchmesser D5 sowie einen Eintritt 32 für das kalte Rücklaufwasser und je einen Austritt 33 und 34 für das erwärmte Vorlaufwasser. Auf diese Weise ist die Wasserkühlung der in Fig. 2 dargestellten Brennermuffel 17 sichergestellt. Diese ist im oberen Bereich der Stirnseite des Flammrohres 31 angeordnet und bläst ihren Flammstrahl schräg abwärts auf das andere Ende des Flammrohres 31, wo im unteren Bereich die Eintritte 36 in einen ersten Rohrzug 37 angeordnet sind.

Unterhalb des Brenners 3 ist mindestens eine Blasdüse 35 angeordnet, durch die bis zu 15 % des Brennluftdurchsatzes in das Flammrohr eingeblasen werden können, um die Verbrennung zu unterstützen, sowie um Ascheablagerungen fortzublasen. Die Blasdüsen 35 können kombiniert werden mit Einblasevorrichtungen für Druckluft oder Dampf, falls Verunreinigungen im Kohlenstaub zu Ablagerungen im Flammrohr führen.

Mit den vorgeschrieben Maßnahmen gelingt es, das Flammrohr 31 stets sauberzuhalten, was für das erfindungsgemäße Verfahren vorteilhaft ist, da auf diese Weise kontrollierbare Temperaturverhältnisse herrschen. Ablagerungen von Asche oder Schlacke im Flammrohr würden den Wärmeübergang behindern und die Temperaturen verändern.

Da die Verbrennung von Kohlenstaub sich bis in den ersten Rohrzug 37 hinein fortsetzt, ist es vorteilhaft jedes einzelne Rohr dieses Rohrzuges mit Blasdüsen 38 zu versehen, durch die eine Zusatzluftmenge 39 von bis zu 15 % der Verbrennungsluftmenge in die Rohre des Rohrzuges 37 eingeblasen werden können. Diese Luftstrahlen sorgen ebenfalls für Sauberhaltung des Eintrittsbereiches in den ersten Rohrzug 37.

Für die angegebene Kesselleistung von ca. 3,5 MW entsprechend einer Feuerungsleistung von 3,9 MW ist es für das erfindungsgemäße Verfahren weiterhin vorteilhaft, für den ersten Rohrzug 37, 25 Rohre vom Durchmesser 88,9 x 5 mm vorzusehen. Dieses ergibt hinreichende Geschwindigkeiten, um auch beim Herabregeln der Leistung die Ablagerung von Asche in den Rohren des ersten Rohrzuges 37 zu vermeiden. Andererseits sind die Geschwindigkeiten noch nicht so hoch, daß sich im oberen Lastbereich des Kessels dynamische Effekte aus dem Zusammenwirken der Gasmasse in den Rohren mit der Elastizität des Gasvolumens im Flammrohr 31 einstellen würden. - Bei Unterschreitung einer hinreichenden Transportgeschwindigkeit der Abgase in den Rohren des ersten Rohrzuges 37 würden sich in den Rohren Ascheablagerungen bilden, die sich dünenähnlich durch die Rohre bewegen und jedesmal beim Eintreffen am Rohrende zu einem Druckstoß führen, wodurch die genaue Einstellung der Brennluftmenge erschwert wird.

Durch die vorgenannte Dimensionierung der Rohre des ersten Rohrzuges 37 erfolgt nur eine begrenzte Abkühlung der Abgase auf ca. 500°C, wodurch die in diesem Rohrzug noch laufenden Verbrennungsreaktionen hinreichend Zeit und Temperaturniveau haben, zu Ende zu laufen. Sich hieraus ergebenden Ascheeigenschaften sind für das erfindungsgemäße Verfahren vorteilhaft.

In einer vorderen Umlenkkammer 40 werden die auf ca. 500°C abgekühlten Abgase den Rohren 41 eines zweiten Rohrzuges zugeführt, in denen sie je nach Kessellast und Wassertemperatur im unteren Bereich des Kessels auf Temperaturen von 110 bis 150°C abgekühlt werden.

Mit Rücksicht auf die vorbeschriebenen Bedingungen, nämlich Aschetransport einerseits und Vermeidung dynamischer Effekte andererseits, ist es für das erfindungsgemäße Verfahren vorteilhaft, im zweiten Rohrzug 288 Rohre vom Durchmesser 30 x 5 mm vorzusehen.

Die aus den Rohren 41 austretenden abgekühlten Abgase werden einem Abgasrohr 42 zugeleitet. Dieses wird vorteilhafter Weise quer zur Kesselachse angeordnet, wobei ihm die Abgase tangential zugeführt werden. Auf diese Weise wird erreicht, daß über die gesamte Länge des Abgasrohres 42 nirgendwo Totwasserzonen entstehen, die zu einer Ablagerung von Asche führen können.

Die gesamte in Fig. 3 dargestellte Anordnung mit Brenner, Flammrohr, den einzelnen Rohrzügen und dem Abgasrohr ist damit selbstreinigend und hält sich im Betrieb vollkommen sauber. Dieses ist für das erfindungsgemäße Verfahren von großem Vorteil, da sich auf diese Weise die gesamte Asche im Abgas befindet und von reproduzierbarer Beschaffenheit ist.

Die in Fig. 3 dargestellte Vorrichtung ist mit gleicher Leistung und praktisch gleichem Wirkungsgrad auch für die Verfeuerung anderer staubförmiger Brennstoffe wie Steinkohle, Holzstaub etc. geeignet, ebenso für die Verbrennung von flüssigen und gasförmigen Brennstoffen.

Für die Anwendung des erfindungsgemäßen Verfahrens auf die Entschwefelung der Abgase beispielsweise flüssiger Brennstoffe sind in bekannter Weise Absorbentien in die Brennermuffel einzublasen, beispielsweise Kalksteinmehl, wobei sich deren Menge und Aufbereitung nach den bekannten einschlägigen Regeln der Technik richtet.

Eine bemerkenswerte Eigenschaft der in Fig. 3 dargestellten Vorrichtung, insbesondere der Brennermuffel und des Flammrohres, ist, daß die Strömungsverhältnisse darin von der Reynolds-Zahl in erster Näherung unabhängig sind. Das bedeutet, daß bei Umrechnung auf andere Feuerungsleistungen die Abmessungen von Muffel und Flammrohr mit der Wurzel aus dem Leistungsverhältnis umzurechnen sind. Dabei ist zu berücksichtigen, daß Brennersysteme nach Fig. 2 keine obere Leistungsgrenze haben; diese ist vielmehr gegeben durch die Aufbereitung und Reaktionswilligkeit des jeweiligen Brennstoffes. Mit steigender Leistung können daher in bekannter Weise höhere Flammgeschwindigkeiten gewählt werden, wodurch bei Umrechnung auf höherer Leistung die Apparate etwas kleiner werden als es der Umrechnungsregel mit der Wurzel aus dem Leistungsverhältnis entspricht. Diese Berücksichtigung entspricht dem Stand der Technik.

Der erste Rohrzug 37 und der zweite Rohrzug 41 arbeiten in Bereichen der Reynolds-Zahlen, in denen der Temperaturabbau wesentlich nur eine Funktion des Verhältnisses der Länge zum Innendurchmesser der jeweiligen Rohre ist. Wenn man bei Umrechnung auf andere Leistungen gleicher Abgastemperaturen am Austritt aus dem Kessel erzielen will, wird in bekannter Weise die Summe der Rohrquerschnitte entsprechend dem Leistungsverhältnis umgerechnet, wobei die Summe der Verhältnisse von Rohrlänge zu Innendurchmesser konstant bleibt. Damit sind Abmessung und Anfall der Rohre des jeweiligen Rohrzuges nach den Regeln der Strömungstechnik eindeutig definiert. Weitere Bemessungsangaben sind hierfür nicht erforderlich.

Wenn die in Fig. 3 beschriebene Vorrichtung zugleich auch die anderen Grenzwerte der TA-Luft insbesondere hinsichtlich NOx und CO erfüllen soll, ist es vorteilhaft, für den Durchmesser D5 des Flammrohres 31 sowie seine Länge L5 folgende Werte zu wählen:

D5 = 1400 mm
L5 = 3850 mm

Daraus ergibt sich dann ein Durchmesser des Kessels 30 von D4 = 2600 mm und eine Länge des Kessels von L4 = 4100 mm.

**Patentansprüche**

1. Verfahren zur vollständigen, trockenen Entschwefelung von $SO_2$ und Flugasche enthaltenden Abgasen der Verbrennung von aschehaltigen Brennstoffen, insbesondere Kohlenstaub, mit folgenden Verfahrensschritten :

a) Aktivierung der Flugasche durch Aufheizung des die Asche enthaltenden Brennstoffs in der Verbrennung mit einer Aufheizgeschwindigkeit von mehr als 3000°C/sec, bevorzugt mehr als 5000°C/sec, bis zu einer Temperatur von mehr als 900°C, bevorzugt 1200°C, jedoch unterhalb der sich Innerhalb der Verweilzeit in der Flamme einstellenden Aschesintertemperatur,

b) Abkühlung der Abgase auf eine Temperatur, die eine Distanz über dem Wassertaupunkt liegt, deren zulässiger Höchstwert von der Verweilzeit der Abgase von erfolgter Abkühlung bis zur Abtrennung des Feinstaubanteiles der Asche wie folgt abhängt :

- bei einer Verweilzeit von 0,8 sec darf die Temperaturdistanz max. 25°C sein,
- bei einer Verweilzeit von 0,1 sec darf die Temperaturdistanz max. 11°C sein,
- dazwischen wird linear interpoliert,

c) Abtrennung der Asche aus den Abgasen.

2. Verfahren zur vollständigen trockenen Entschwefelung von $SO_2$-haltigen Abgasen der Verbrennung von Brennstoffen, die keine Asche enthalten oder deren Asche für das Verfahren nach Anspruch 1 nicht ausreicht, gekennzeichnet dadurch, daß für das Verfahren geeignete Absorbentien, beispielsweise Kalksteinmehl, in feingemahlener Form in die Flamme eingeblasen werden derart, daß:

a) diese Teilchen in der Verbrennung aktiviert werden durch Aufheizung innerhalb der Verbrennung mit einer Aufheizgeschwindigkeit von mehr als 3000°C/sec, bevorzugt mehr als 5000°C/sec, bis zu einer Temperatur bis zu mehr als 900°C, bevorzugt 1200°C, jedoch unterhalb der sich Innerhalb der Verweilzeit in der Flamme einstellenden Sintertemperatur der Absorbentien bzw. Asche,

b) Abkühlung der Abgase auf eine Temperatur, die eine Distanz über dem Wassertaupunkt liegt, deren zulässiger Höchstwert von der Verweilzeit der Abgase von erfolgter Abkühlung bis zur Abtrennung des Feinstanteiles der Stäube wie folgt abhängt :

- bei einer Verweilzeit von 0,8 sec darf die Temperaturdistanz max, 25°C sein,
- bei einer Verweilzeit von 0,1 sec darf die Tempedistanz max. 11°C sein,
- dazwischen wird linear intepoliert,

c) Abtrennung der Stäube aus den Abgasen.

3. Verfahren nach einem der Ansprüche 1 oder 2, gekennzeichnet dadurch, daß die notwendige Unterschreitung des zulässigen Höchstwertes der Temperaturdistanz dadurch erzeugt wird, daß die Abgase durch Kontakt mit kälteren Flächen bis auf den sich aus der Verbrennung und der atmosphärischen Feuchte ergebenden Wassertaupunkt abgekühlt werden.

4. Verfahren nach einem der vorstehenden Ansprüche, gekennzeichnet dadurch, daß der Taupunkt der Verbrennungsabgase durch Zusatz von Wasser oder Wasserdampf erhöht wird.

5. Verfahren nach einem der vorstehenden Ansprüche, gekennzeichnet dadurch, daß die Verbrennung und die dadurch bewirkte Aufheizung der Teilchen der Verbrennungsasche oder der zugesetzten Absorbentien in einer Brennermuffel erfolgt, die einen wärmeaufnehmenden Raum, beispielsweise den Strahlungsraum eines Kessels, befeuert.

6. Verfahren nach Anspruch 5, gekennzeichnet dadurch, daß die Verbrennungsabgase durch Feuerungsraum und Züge eines Kessels geleitet werden und dabei abkühlen.

7. Verfahren nach Anspruch 5 oder 6, gekennzeichnet dadurch, daß die den Kessel oder sonstigen befeuerten Objekt verlassenden Abgase einem Kühler zugeführt werden, der die Abgase mindestens auf die vorgenannte Temperaturdistanz zum Wassertaupunkt abkühlt.

8. Verfahren nach Anspruch 7, gekennzeichnet dadurch, daß der Kühler derart betrieben wird, daß die rauchgasseitige Temperatur seiner wärmeaufnehmenden Flächen oberhalb des Wassertaupunktes der ihn durchströmenden Abgase liegt.

9. Brenner für eine Vorrichtung zur Ausführung des Verfahrens nach Anspruch 1 oder 2, gekennzeichnet durch eine divergente Brennermuffel (17) mit einer anschlieschließenden konvergenten Flammbeschleunigungsdüse (19), mit folgenden, auf eine Feuerungsleistung von 3,9 MW bezogenen Abmessungen:

| Eintrittsdurchmesser der Brennermuffel 17 : | D1 = 338 mm |
|---|---|
| Austrittsdurchmesser der Brennermuffel 17: | D2 = 700 mm |
| Austrittsdurchmesser der Beschleun-düse 19: | D3 = 350 mm |
| Länge des Schaufelgitters 13: | L1 = 197 mm |
| Länge der Brennermuffel 17: | L2 = 1470 mm, |

wobei dem Durchmesser D1 radiale Leitschaufeln vorgeordnet sind, welche die Brennluft mit einem Spiralwinkel gegen die Umfangsrichtung zwischen 6 und 12°, bevorzugt zwischen 8 und 10° zuführen, wobei die Leitschaufeln vorteilhaft nach einer logarithmischen Spirale geformt sind.

10. Flammrohr für eine Vorrichtung zur Ausführung des Verfahrens nach Anspruch 1 oder 2, gekennzeichnet dadurch, daß es bezogen auf eine Feuerungsleistung von 3,9 MW des Brenners folgende Abmessungen aufweist:

| Durchmesser des Flammrohrs 31: | D5 = 1400 mm |
|---|---|
| Länge des Flammrohrs 31: | L5 = 3850 mm, |

oder ein rechteckiger Feuerungsraum vom gleichem hydraulichem Durchmesser ist.

11. Vorrichtung nach Ansprüchen 9 und/oder 10, gekennzeichnet dadurch, daß bei anderen Feuerungsleistungen als 3,9 MW die angegebenen Abmessungen mit der Wurzel aus dem Verhältnis der Feuerungsleistungen umgerechnet sind, wobei der Winkel der Luftleitschaufeln unverändert ist.

12. Flammrohr nach Anspruch 10 oder 11, gekennzeichnet dadurch, daß unterhalb des Brennermündung der Stirnseite des Flammrohres wenigstens eine Öffnung vorhanden ist, deren Ausblasequerschnitt so bemessen ist, daß durch denselben bis zu 15 % der Verbrennungsluft in das Flammrohr eingeblasen Werden können, wodurch die Verbrennung unterstützt sowie abgelagerte Ascheteilchen fortgeblasen werden können.

13. Flammrohr nach einen der Ansprüche 10 bis 12, gekennzeichnet dadurch, daß an der Stirnwand des Flammrohres unterhalb der Brennermündung Öffnungen angebracht sind, durch die Dampf oder Druckluft kontinuierlich oder in Stößen eingeblasen werden kann zur Beseitigung von Ablagerungen im unteren Bereich des Flammrohres.

14. Flammrohr nach einem der Ansprüche 10 bis 13, gekennzeichnet dadurch, daß die Abgasaustritte aus dem Flammrohr sich an dem der Brennermündung gegenüberliegenden Ende befinden.

15. Flammrohr nach Anspruch 14, gekennzeichnet dadurch, daß die Abgasaustritte aus dem Flammrohr ausgebildet sind als Öffnungen im unteren Bereich des Flammrohres, die mit den Rohren eines nachgeschalteten ersten Rohrzuges verbunden sind.

16. Flammrohr nach Anspruch 15, gekennzeichnet dadurch, daß den Rohren des ersten Rohrzuges Einblaseöffnungen zugeordnet sind, deren Querschnitt so bemessen ist, daß durch dieselben bis zu 15 % der Brennluft in die Rohre des ersten Rohrzuges eingeblasen werden können.

17. Flammrohr nach einem der Ansprüche 15 und 16, gekennzeichnet dadurch, daß bei einer Feuerungsleistung von 3,9 MW der erste Rohrzug aus 25 Rohren der Abmessung 88,5 x 5 mm besteht.

18. Flammrohr nach einem der Ansprüche 15 bis 17, gekennzeichnet durch einen sich an den ersten Rohrzug anschließenden zweiten Rohrzug, bestehend aus 288 Rohren der Abmessung 30 x 5 mm.

19. Flammrohr nach einem der Ansprüche 15 bis 17, dadurch gekennzeichnet, daß für andere Feuerungsleistungen als 3,9 MW die Summe der Rohrquerschnitte proportional zur Feuerungsleistung umgerechnet ist, wobei zur Aufrechterhaltung der Abgastemperatur am Kesselaustritt die Summe des Verhältnisses von Rohrlänge zu lichtem Durchmesser unverändert ist.

**Claims**

1. Method for the complete, dry desulphurization of combustion flue gases containing $SO_2$ and fly ash and resulting from the combustion of combustibles containing ash, in particular of pulverized coal, characterized by the following steps:

    a) activation of the fly ash by heating up the combustible containing the ash during the combustion with a heating up speed of more than 3000°C/sec, preferably more than 5000°C/sec, up to a temperature of more than 900°C, preferably 1200°C, but below the ash sintering temperature developing during the residence time within the flame,

    b) cooling the combustion flue gases to a temperature distant from the water dew point, with the admissible highest value thereof being dependent on the residence time of the combustion flue gases between the termination of the cooling process and the time of separation of the fine grain portion of the ash, as follows:
    - in case of a residence time of 0.8 sec, the temperature distance is 25°C maximum,
    - in case of a residence time of 0.1 sec, the temperature distance is 11°C maximum,
    - inbetween it is interpolated linearly.

    c) separation of the ash from the flue gases.

2. Method for the complete, dry desulphurization of combustion flue gases containing $SO_2$ and resulting from the combustion of combustibles which do not contain ash or whose ash amount is not sufficient for the method of claim 1, characterized in that absorbents suitable for the method, e.g. limestone powder, are blown into the flame in pulverized form such that:

    a) these particles are activated during the combustion process by heating up during the combustion with a heating up speed of more than 3000°C/sec, preferably more than 5000°C/sec up to a temperature of more than 900°C, preferably 1200°C, but below the sintering temperature developing during the residence time of the absorbents and the ash, respectively, within the flame,

    b) cooling the combustion flue gases to a temperature distant from the water dew point, with the admissible highest value of the temperature distance being dependent on the residence time of the combustion flue gases between the termination of the cooling process and the time of separation of the finest grain portion of the particles, as follows:
    - in case of a residence time of 0.8 sec, the temperature distance is 25°C maximum,
    - in case of a residence time of 0.1 sec, the temperature distance is 11°C maximum,
    - inbetween it is interpolated linearly.

    c) separation of the particles from the flue gases.

3. Method according to one of claims 1 and 2, characterized in that the required undershooting of the admissible maximum value of the temperature distance is attained in that the combustion flue gases are cooled down to the water dew point resulting from the combustion and the atmospherical moisture by contacting the gases with cooler surfaces.

4. Method according to one of the preceding claims, characterized in that the dew point of the combustion flue gases is increased by adding water or steam.

5. Method according to one of the preceding claims, characterized in that the combustion and the heating up effected thereby of the particles of the combustion ash and of added combustibles, respectively, is carried out in a burner muffle, which fires a heat receiving chamber, e.g. a radiation compartment of a vessel.

6. Method according to claim 5, characterized in that the combustion flue gases flow through the firing chamber and through flues of a boiler and thereby cool down.

7. Method according to claim 5 or 6, characterized in that the flue gases leaving the boiler or other fired object are fed to a cooler which cools the flue gases at least to said temperature distant from the water dew point.

8. Method according to claim 7, characterized in that the cooler is operated in a manner that the temperature of its heat receiving surfaces exposed to the flue gas is higher than the water dew point of the flue gases flowing therethrough.

9.  Burner for an apparatus for carrying out the method of claim 1 or 2, characterized by a divergent burner muffle (17) having a downstream convergent flame accelerator nozzle (19), and having the following dimensions, referred to a firing capacity of 3.9 MW:

| diameter at the inlet of the muffle (17): | D1 = 338 mm |
|---|---|
| diameter at the outlet of the muffle (17): | D2 = 700 mm |
| diameter at the outlet of the accel. nozzle (19): | D3 = 350 mm |
| axial length of the vane arrangemant (13): | L1 = 197 mm |
| axial length of the muffle (17): | L2 = 1470 mm |

with radial guide vanes being arranged upstream of the diameter D1 which supply the combustion air at a spiral angle with respect to the circumferential direction of 6 to 12°, preferably 8 to 10°, with the guide vanes being preferably formed in accordance with a logarithmical spiral.

10.  Flame tube for an apparatus for carrying out the method of claim 1 or 2, characterized in that, referred to a firing capacity of 3,9 MW of the burner, it has the following dimensions:

| diameter of the flame tube (31): | D5 = 1400 mm |
|---|---|
| length of the flame tube (31): | L5 = 3580 mm |

or is a rectangular firing chamber having the same hydraulic diameter.

11.  Apparatus according to at least one of claims 9 and 10, characterized in that with firing capacities other than 3.9 MW the above dimensions are calculated with the square root of the ratio of the firing capacities, with the angle of the air guide vanes being unchanged.

12.  Flame tube according to claim 10 or 11, characterized in that at the front side of the flame tube below the burner outlet at least one opening is disposed, the blow-out cross-section thereof being dimensioned such that through same up to 15 % of the combustion air can be blown into the flame tube, by means of which the combustion is supported and deposited ash particles are blown away.

13.  Flame tube according to one of claims 10 to 12, characterized in that at the front side of the flame tube underneath the burner outlet a plurality of openings are provided through which steam or pressurized air can continuously or pulsatingly be blown in for removal of deposits from the lower region of the flame tube.

14.  Flame tube according to one of claims 10 to 13, characterized in that the combustion flue gas outlets of the flame tube are located at the end thereof opposite the burner outlet.

15.  Flame tube according to claim 14, characterized in that the combustion flue gas outlets of the flame tube are formed as openings in the lower region of the flame tube which are connected to the tubes of a downstream connected first tube flue.

16.  Flame tube according to claim 15, characterized in that blow-in openings are assigned to the tubes of the first tube flue, the cross-sections of which are dimensioned such that up to 15% of the combustion air can be blown through the blow-in openings into the tubes of the first tube flue.

17.  Flame tube according to claims 15 or 16, characterized in that with a firing capacity of 3.9 MW the first tube flue consists of 25 tubes each having the cross-sectional dimensions of 88.5 x 5 mm.

18.  Flame tube according to one of claims 15 to 17, characterized by a second tube flue adjoining to the first tube flue and consisting of 288 tubes each having the cross-sectional dimensions of 30 x 5 mm.

19.  Flame tube according to any one of claims 15 to 17, characterized in that with firing capacities other than 3.9 MW, the sum of the tube cross-sections is calculated proportional to the firing capacity, in which for maintaining the combustion flue gas temperature at the boiler outlet the sum of the ratio of the tube length to their clear diameter is unchanged.

**Revendications**

1. Procédé de désulfuration à sec complète des fumées contenant du $SO_2$ et des cendres volantes qui proviennent de la combustion de combustibles contenant des cendres, notamment de poussier de charbon, comportant les opérations suivantes de procédé :

   a) activation des cendres volantes par chauffage du combustible contenant les cendres, dans la combustion , à une vitesse de chauffage de plus de 3000°C/s, de préférence de plus de 5000°C/s, jusqu'à une température de plus de 900°C, de préférence de 1200°C, mais inférieure à la température de frittage des cendres qui se présente au cours de la durée de séjour dans la flamme,

   b) refroidissement des fumées à une température qui est située à un écart au-dessus du point de rosée de l'eau dont la valeur maximale admissible dépend, de la manière qui suit, de la durée de séjour des fumées, du moment où le refroidissement est réalisé à celui de la séparation des poussières fines contenues dans les cendres :

   - dans le cas d'une durée de séjour de 0,8 s, l'écart de température doit être au maximum de 25°C,
   - dans le cas d'une durée de séjour de 0,1 s, l'écart de température doit être au maximum de 11°C,
   - entre les deux, on procède à une interpolation linéaire,

   c) séparation des cendres vis-à-vis des fumées.

2. Procédé de désulfuration à sec complète des fumées contenant du $SO_2$ qui proviennent de la combustion de combustibles qui ne contiennent pas de cendres ou dont les cendres ne sont pas suffisantes pour le procédé selon la revendication 1, caractérisé en ce que des agents d'absorption convenant pour le procédé, par exemple de la chaux pulvérisée, sont insufflés dans la flamme sous forme finement broyée, d'une façon telle que :

   a) ces particules sont activées dans la combustion par chauffage au cours de la combustion, à une vitesse de chauffage de plus de 3000°C/s, de préférence de plus de 5000°C/s, jusqu'à une température de plus de 900°C, de préférence de 1200°C, mais inférieure à la température de frittage des agents d'absorption ou des cendres qui se présente au cours de la durée de séjour dans la flamme,

   b) refroidissement des fumées à une température qui est située à un écart au-dessus du point de rosée de l'eau dont la valeur maximale admissible dépend, de la manière qui suit, de la durée de séjour des fumées, du moment où le refroidissement est réalisé à celui de la séparation des plus fines des poussières :

   - dans le cas d'une durée de séjour de 0,8 s, l'écart de température doit être au maximum de 25°C,
   - dans le cas d'une durée de séjour de 0,1 s, l'écart de température doit être au maximum de 11°C,
   - entre les deux, on procède à une interpolation linéaire,

   c) séparation des poussières vis-à-vis des fumées.

3. Procédé selon l'une des revendications 1 ou 2, caractérisé en ce que le passage nécessaire au-dessous de la valeur maximale admissible de l'écart de température est produit par le fait que les fumées sont refroidies, par contact avec des surfaces plus froides, jusqu'au point de rosée de l'eau qui résulte de la combustion et de l'humidité atmosphérique.

4. Procédé selon l'une des revendications précédentes, caractérisé en ce que le point de rosée des fumées de combustion est élevé par addition d'eau ou de vapeur d'eau.

5. Procédé selon l'une des revendications précédentes, caractérisé en ce que la combustion et le chauffage des particules des cendres de combustion ou des agents d'absorption ajoutés qui résulte de cette combustion ont lieu dans un moufle à brûleur qui alimente en énergie thermique une enceinte absorbant de la chaleur, par exemple la chambre de rayonnement d'une chaudière.

6. Procédé selon la revendication 5, caractérisé en ce que les fumées de combustion passent par le foyer et les faisceaux d'une chaudière et sont ainsi refroidies.

7. Procédé selon la revendication 5 ou 6, caractérisé en ce que les fumées quittant la chaudière ou autre objet alimenté en énergie thermique sont envoyées à un appareil de refroidissement qui refroidit les fumées au moins au susdit écart de température vis-à-vis du point de rosée de l'eau.

8. Procédé selon la revendication 7, caractérisé en ce que l'appareil de refroidissement fonctionne d'une façon telle que la température, côté fumées, de ses surfaces absorbant de la chaleur est située au-dessus du point de rosée de l'eau pour les fumées passant dans cet appareil de refroidissement.

9. Brûleur pour installation de mise en oeuvre du procédé des revendications 1 ou 2, caractérisé par un moufle à brûleur (17) qui a une forme divergente et qui est prolongé par une buse d'accélération de flamme (19) convergente, avec les dimensions suivantes, rapportées à une puissance de chauffe de 3,9 MW :

| | |
|---|---|
| - diamètre d'entrée du moufle à brûleur 17 : | D1 = 338 mm |
| - diamètre de sortie du moufle à brûleur 17 : | D2 = 700 mm |
| - diamètre de sortie de la buse d'accélération 19 : | D3 = 350 mm |
| - longueur de la grille d'ailettes 13 : | L1 = 197 mm |
| - longueur du moufle à brûleur 17 : | L2 = 1470 mm, |

tandis qu'en amont du diamètre D1, il est disposé des ailettes directrices radiales qui guident l'air de combustion avec un angle de spirale vis-à-vis de la direction circonférentielle qui est compris entre 6 et 12°, de préférence entre 8 et 10°, les ailettes directrices ayant de préférence la forme d'une spirale logarithmique.

10. Tube-foyer pour installation de mise en oeuvre du procédé des revendications 1 ou 2, caractérisé en ce qu'il a les dimensions suivantes, rapportées à une puissance de chauffe du brûleur de 3,9 MW :

| | |
|---|---|
| - diamètre du tube-foyer 31 : | D5 = 1400 mm |
| - longueur du tube-foyer 31 : | L5 = 3850 mm, |

ou en ce qu'il est un foyer parallélépipédique de même diamètre hydraulique.

11. Installation selon les revendications 9 et/ou 10, caractérisée en ce que, dans le cas de puissances de chauffe différentes de 3,9 MW, les dimensions indiquées sont corrigées suivant le cube du rapport des puissances de chauffe, tandis que l'angle des ailettes directrices reste inchangé.

12. Tube-foyer selon les revendications 10 ou 11, caractérisé en ce qu'au-dessous de l'ouverture du brûleur et sur la face frontale du tube-foyer, il est prévu au moins un orifice dont la section de soufflage est dimensionnée de manière telle que jusqu'à 15% de l'air de combustion puisse être insufflé dans le tube-foyer par cet orifice, de sorte que la combustion peut être entretenue et les particules de cendres déposées peuvent être transportées plus loin par soufflage.

13. Tube-foyer selon l'une des revendications 10 à 12, caractérisé en ce que, sur la paroi frontale du tube-foyer et au-dessous de l'ouverture du brûleur, il est prévu des orifices par lesquels la vapeur ou l'air comprimé peut être insufflé d'une manière continue ou par impulsions en vue d'écarter les dépôts situés dans la zone inférieure du tube-foyer.

14. Tube-foyer selon l'une des revendications 10 à 13, caractérisé en ce que les sorties des fumées hors du tube-foyer sont situées à l'extrémité opposée à l'ouverture du brûleur.

15. Tube-foyer selon la revendication 14, caractérisé en ce que les sorties des fumées hors du tube-foyer sont réalisées sous la forme d'orifices situés dans la zone inférieure du tube-foyer et communiquant avec les tubes d'un premier faisceau disposé en aval.

16. Tube-foyer selon la revendication 15, caractérisé en ce qu'aux tubes du premier faisceau, il est associé des orifices d'insufflation dont la section est dimensionnée de façon que jusqu'à 15% de l'air de combustion puisse être insufflé par ces orifices dans les tubes du premier faisceau.

**17.** Tube-foyer selon l'une des revendications 15 et 16, caractérisé en ce que, dans le cas d'une puissance de chauffe de 3,9 MW, le premier faisceau est composé de 25 tubes de dimensions 88,5 x 5 mm.

**18.** Tube-foyer selon l'une des revendications 15 à 17, caractérisé par un second faisceau de tubes qui est raccordé au premier faisceau et qui est composé de 288 tubes de dimensions 30 x 5 mm.

**19.** Tube-foyer selon l'une des revendications 15 à 17, caractérisé en ce que, dans le cas de puissances de chauffe différentes de 3,9 MW, la somme des sections des tubes est corrigée d'une manière proportionnelle à la puissance de chauffe, tandis que, pour maintenir la température des fumées à la sortie de la chaudière, la somme des rapports des longueurs des tubes au diamètre intérieur libre reste inchangé.

FIG.1

FIG.2

FIG. 3

EP 0 496 856 B1